# EUROPEAN PATENT SPECIFICATION

(11) **EP 3 456 865 B1**
(45) Date of publication and mention of the grant of the patent: **11.03.2020**
(21) Application number: 18194221.0
(22) Date of filing: 13.09.2018
(51) Int. Cl.: C23C 22/34

(54) **TRIVALENT CHROMIUM CHEMICAL CONVERSION TREATMENT LIQUID FOR ZINC OR ZINC ALLOY BASE AND CHEMICAL CONVERSION TREATMENT METHOD USING THE SAME**
BEHANDLUNGSFLÜSSIGKEIT MIT DREIWERTIGEM CHROM ZUR CHEMISCHEM UMWANDLUNG FÜR ZINK- ODER ZINKLEGIERUNGSBASIS UND BEHANDLUNGSVERFAHREN ZUR CHEMISCHEN UMWANDLUNG MIT VERWENDUNG DAVON
LIQUIDE DE TRAITEMENT DE CONVERSION CHIMIQUE À BASE DE CHROME TRIVALENT POUR BASE DE ZINC OU D'ALLIAGE DE ZINC ET PROCÉDÉ DE TRAITEMENT DE CONVERSION CHIMIQUE L'UTILISANT

(30) Priority: 14.09.2017 JP 2017177016
(43) Date of publication of application: 20.03.2019
(73) Proprietor: DIPSOL CHEMICALS CO., LTD., Tokyo 104-0028 (JP)
(72) Inventor: IWANAGA,, Ryouji, Nagareyama-shi, Chiba 270-0121 (JP); INOUE,, Manabu, Nagareyama-shi, Chiba 270-0121 (JP); YAMAMOTO,, Tomitaka, Nagareyama-shi, Chiba 270-0121 (JP); FUJINO,, Takahiro, Nagareyama-shi, Chiba 270-0121 (JP)
(74) Representative: Cockerton, Bruce Roger

(56) References cited:
- EP-A1- 2 060 660
- US-A1- 2007 187 001

## Description

### [Technical Field]

The present invention relates to a novel chemical conversion treatment liquid for forming a silver-white chemical coating finished with uniform and haze-free (white haze-free) appearance and having excellent corrosion resistance on the surface of a zinc or zinc alloy metal, and relates to a chemical conversion treatment method using the same.

### [Background Art]

Chemical conversion treatment is a technique that has been used from old times to impart corrosion resistance to metal surfaces, and is also currently used for surface treatment for aircraft, construction materials, automobile parts, and the like. However, the coating of chemical conversion treatment represented by the chromic acid, chromate chemical conversion treatment partly contains harmful hexavalent chromium.

The hexavalent chromium is subject to restrictions by WEEE (Waste Electrical and Electronic Equipment) Directive and RoHS (Restriction of Hazardous Substances) Directive, ELV (End of Life Vehicles) Directive, and the like. For this reason, chemical conversion treatment liquids using trivalent chromium instead of hexavalent chromium have been extensively studied and industrialized (Japanese Patent Application Publication No. 2003-166074). The trivalent chromium chemical conversion treatment liquid not containing hexavalent chromium, in particular, often uses a cobalt compound in order to enhance corrosion resistance. The cobalt is one of so-called rear metals, and is not actually supplied in the stable supply system for the reasons such as expansion of a range of applications and limited production countries. Meanwhile, cobalt chloride, cobalt sulfate, cobalt nitrate, and cobalt carbonate also fall under SVHC (Substances of Very High Concern) specified by the REACH (Registration, Evaluation, Authorization and Restriction of Chemicals) regulation. Hence, there is movement to restrict use of these substances.

EP 2 060 660 discloses an aqueous treating solution for an Sn-based and hot-dip Zn-based plated steel sheet, comprising (A) an organic material, (B) a water-soluble chromium compound, (C) a water-dispersible silica, a phosphate compound (D), eventually a metal salt (E), in particular cobalt nitrate and nickel nitrate, and water. The organic material (A) is at least one member selected from an oxy-acid with the ratio of hydroxyl group/carboxyl group in one molecule being from 3/1 to 10/1, its lactone form and an oxide derivative thereof, the water-soluble chromium compound (B) does not contain hexavalent chromium, and the pH is from 0.7 to 6.0.

US 2007/187001 discloses corrosion resistant coatings formed on iron, titanium, aluminum, magnesium and/or zinc and alloys thereof by contacting with aqueous solutions containing trivalent chromium ions and fluorometallate ions. The solutions are substantially free of hexavalent chromium.

### [Citation List]

### [Patent Literature]

[Patent Literature 1] Japanese Patent Application Publication No. 2003-166074
[Patent Literature 2] Japanese Patent Application Publication No. H07-11454
[Patent Literature 3] European Patent Application publication number 2 060 660 A1
[Patent Literature 4] United States Patent Application publication number 2007/187001 A1

### [Summary of Invention]

### [Technical Problems]

In view of the aforementioned circumstances, the present invention has an object to provide a trivalent chromium chemical conversion treatment liquid for a zinc or zinc alloy base, the liquid being capable of forming an environmentally-friendly chemical conversion coating with high corrosion resistance. The present invention has another object to provide a trivalent chromium chemical conversion treatment liquid capable of making zinc plating achieve high corrosion resistance comparable to that of zinc nickel alloy plating and forming a well-finished appearance without white haze.

### [Solution to Problems]

As a result of earnest studies to achieve these two objects, the present inventors completed the present invention by finding that a trivalent chromium chemical conversion treatment liquid which contains trivalent chromium ions without containing hexavalent chromium and which is capable of forming, on zinc and zinc ally surfaces, environmentally-friendly white-silver chemical conversion coatings having excellent corrosion resistance and finished with uniform appearance without white haze can be obtained by: causing the chemical conversion treatment liquid to contain chain colloidal silica together with zirconium ions and nitrate ions; and adjusting the pH of the chemical conversion treatment liquid within a particular pH range.

In other words, the present invention provides a hexavalent chromium-free trivalent chromium chemical conversion treatment liquid for a zinc or zinc alloy base, the treatment liquid comprising trivalent chromium ions, zirconium ions, nitrate ions, and chain colloidal silica, having a pH of 2.5 to 5.0 and a molar ratio of trivalent chromium ions to zirconium ions (trivalent chromium ions/zirconium ions) is 0.1 to 4.

In addition, the present invention provides a chemical conversion treatment method comprising bringing the chemical conversion treatment liquid into contact with a zinc or zinc alloy base.

### [Advantageous Effect of the Invention]

According to the present invention, it is possible to provide a trivalent chromium chemical conversion treatment liquid for a zinc or zinc alloy base capable of forming an environmentally-friendly chemical conversion coating achieving excellent corrosion resistance even without containing hexavalent chromium and cobalt, and finished with silver-white uniform appearance without white haze.

### [Brief Description of the Drawing]

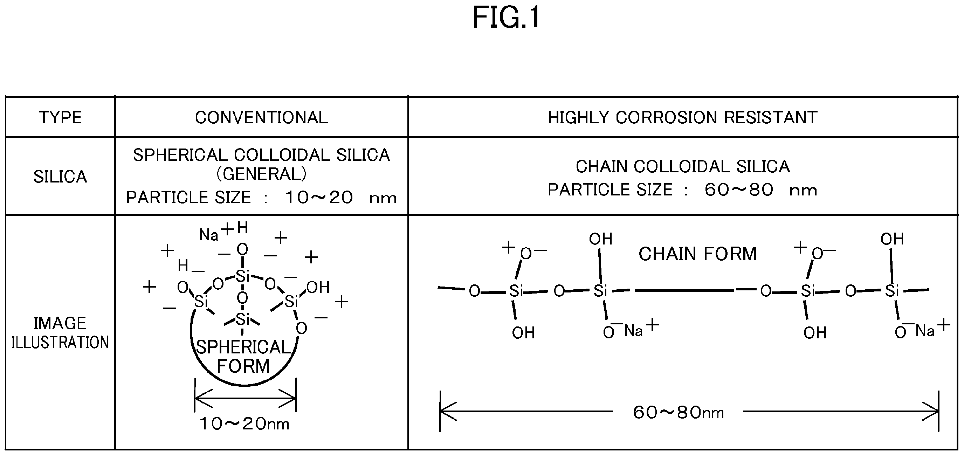

[Fig. 1] Fig. 1 is a diagram illustrating chain colloidal silica and spherical colloidal silica.

### [Description of Embodiments]

A base material used in the present invention is not particularly limited, but may be any material whose surface can be coated with zinc or a zinc alloy. Examples of the base material are various metals such as iron, nickel, and copper, alloys thereof, or metals and alloys such as aluminum treated with zinc substitution, and have various shapes such as a plate-like shape, a rectangular parallelepiped, a column, a cylinder, and a spherical shape. A specific example is a disc brake caliper.

The aforementioned base material is plated with zinc or a zinc alloy by a conventional method. The zinc plating may be deposited on the base material by using an acidic/neutral bath such as a sulfuric acid bath, a fluoroborate bath, a potassium chloride bath, a sodium chloride bath, and an ammonium chloride eclectic bath, or an alkaline bath such as a cyan bath, a zincate bath, and a pyrophosphoric acid bath. A preferable bath is an acidic bath. In addition, the zinc alloy plating may be deposited in any alkaline bath such as an ammonium chloride bath and an organic chelate bath.

Then, as the zinc alloy plating, there are zinc-iron alloy plating, zinc-nickel alloy plating, zinc-cobalt alloy plating, tin-zinc alloy plating, and so on. Preferable alloy plating is zinc-nickel alloy plating. The zinc or zinc alloy plating deposited on the base material can have any thickness, which may be 1 µm or more, and preferably 5 to 25 µm.

In the present invention, zinc or zinc alloy plating is deposited on the base material in the aforementioned way, then appropriate pretreatment is carried out as needed such as water washing or water washing followed by activation treatment by nitric acid, and thereafter chemical conversion treatment is carried out in a method such as dipping treatment using a trivalent chromium chemical conversion treatment liquid for a zinc or zinc alloy base of the present invention.

The trivalent chromium chemical conversion treatment liquid of the present invention does not substantially contain hexavalent chromium ions but contains trivalent chromium ions, zirconium ions, nitrate ions and chain colloidal silica, the molar ratio of trivalent chromium ions to zirconium ions is 0.1 to 4 and the pH of the treatment liquid is 2.5 to 5.0.

A trivalent chromium compound that provides the trivalent chromium ions is not particularly limited, but is preferably water-soluble. Examples of the trivalent chromium compound include trivalent chromium salts such as chromium chloride, chromium sulfate, chromium nitrate, chromium phosphate, and chromium acetate. Instead, hexavalent chromium ions of a chromate or dichromate may be reduced to trivalent chromium ions with a reducing agent. These trivalent chromium compounds may be used singly or in combination of two or more kinds. The content of trivalent chromium ions in the treatment liquid is 2 to 200 mmol/L, preferably 5 to 100 mmol/L, and more preferably 10 to 80 mmol/L. By setting the content of trivalent chromium ions in such a range, excellent corrosion resistance can be obtained. In addition, in the present invention, use of trivalent chromium at such a low concentration range is advantageous from the viewpoint of waste water treatment and an economic viewpoint.

A zirconium compound that provides the zirconium ions is not particularly limited, but is preferably water-soluble. Examples of the zirconium compound include: inorganic zirconium compounds or salts thereof such as zirconium nitrate, zirconium oxynitrate, zirconium nitrate ammonium, zirconyl chloride, zirconyl sulfate, zirconium carbonate, zirconyl carbonate ammonium, zirconyl potassium carbonate, zirconyl sodium carbonate, zirconyl lithium carbonate, and zirconium hydrofluoric acid (H₂ZrF₆) and salts thereof (for example, a sodium salt, a potassium salt, a lithium salt, and an ammonium salt) ; and organic zirconium compounds such as zirconyl acetate, zirconium lactate, zirconium tartrate, zirconium malate, and zirconium citrate. Preferable zirconium compounds are a zirconium hydrofluoric acid (H₂ZrF₆) and salts thereof, for example, a sodium salt, a potassium salt, a lithium salt and an ammonium salt [(NH₄)₂ZrF₆] of the zirconium hydrofluoric acid (H₂ZrF₆). These zirconium compounds may be used singly or in combination of two or more kinds . The content of zirconium ions in the treatment liquid is 1 to 300 mmol/L, preferably 2 to 150 mmol/L, and more preferably 5 to 50 mmol/L. By setting the content of zirconium ions in such a range, excellent corrosion resistance can be obtained.

Moreover, in the present invention, a molar ratio of trivalent chromium ions to zirconium ions (trivalent chromium ions/zirconium ions) is 0.1 to 4, preferably 0.2 to 3.5, and more preferably 0.3 to 3. By setting the molar ratio of trivalent chromium ions to zirconium ions in such a range, a chemical conversion coating with excellent appearance and corrosion resistance can be obtained.

A nitric acid compound that provides the nitrate ions is not particularly limited, but is preferably water-soluble. Examples of the nitric acid compound include nitric acid, ammonium nitrate, sodium nitrate, potassium nitrate, lithium nitrate, and the like. These nitric acid compounds may be used singly or in combination of two or more kinds. The content of nitrate ions in the treatment liquid is 30 to 400 mmol/L, preferably 40 to 300 mmol/L, and more preferably 50 to 200 mmol/L. By setting the content of nitrate ions in such a range, excellent appearance and corrosion resistance can be obtained.

In the present invention, as depicted in Fig. 1, the chain colloidal silica is chain colloidal silica in which several to dozen primary particles of the colloidal silica are linked in a chain form unlike spherical colloidal silica which is usually used. The chain colloidal silica may be in a linear chain or branched chain. The average particle size of the primary particles of the colloidal silica is preferably 5 to 20 nm, and more preferably 10 to 15 nm. In the chain colloidal silica, primary particles are bound preferably in a link having a length of 20 to 200 nm, and more preferably in a link having a length of 40 to 100 nm. Here, the length of the chain colloidal silica is the total length of the length of the main chain and the length of the branched chain. The size of the chain colloidal silica is 20 to 200 nm in length. These kinds of chain colloidal silica may be used singly or in combination of two or more kinds. The concentration of the chain silica is 25 to 600 mmol/L, preferably 30 to 450 mmol/L, and more preferably 40 to 300 mmol/L. By setting the content of the chain colloidal silica in such a range, excellent appearance and corrosion resistance can be obtained. Such chain colloidal silica is commercially available. For example, there are ST-UP and ST-OUP manufactured by Nissan Chemical Industries, Ltd., and so on.

The trivalent chromium chemical conversion treatment liquid for a zinc or zinc alloy base of the present invention can form a coating with excellent corrosion resistance on the surface of zinc or zinc alloy plating even without containing cobalt ions. However, the treatment liquid may further contain cobalt ions. In the case where cobalt ions are contained, the content thereof is preferably 300 mmol/L or less, more preferably 100 mmol/L or less, and even more preferably 50 mmol/L or less. A cobalt compound that provides cobalt ions is not particularly limited but is preferably water-soluble. Examples of the cobalt compound are cobalt nitrate, cobalt chloride, cobalt sulfate, and the like. These cobalt compounds may be used singly or in combination of two or more kinds.

The trivalent chromium chemical conversion treatment liquid for a zinc or zinc alloy base of the present invention may further contain fluoride ions. The content of fluoride ions is preferably 6 to 1800 mmol/L, and more preferably 30 to 300 mmol/L. The fluoride ion serves as a counter ion of the zirconium ion, and the fluoride ions with the content set in such a range can stabilize the zirconium ions.

A fluorine-containing compound that provides the fluoride ions is not particularly limited. Examples of the fluorine-containing compound include hydrofluoric acid, fluoroboric acid, ammonium fluoride, zirconium fluoride, hexafluorozirconic acid or a salt thereof, and the hexafluorozirconic acid or the salt thereof is preferable. These fluorine-containing compounds may be used singly or in combination of two or more kinds.

The trivalent chromium chemical conversion treatment liquid for a zinc or zinc alloy base of the present invention may further contain a water-soluble carboxylic acid or a salt thereof. The content of the water-soluble carboxylic acid or the salt thereof is preferably 0.1 g/L to 10 g/L, more preferably 0.5 g/L to 8 g/L, and even more preferably 1 g/L to 5 g/L. The water-soluble carboxylic acid or the salt thereof with the content set in such a range can stabilize the trivalent chromium ions by forming a complex with the trivalent chromium ions. Preferably, the molar ratio of the trivalent chromium ions to the water-soluble carboxylic acid or the salt thereof is 0.5 to 1.5, both inclusive.

The water-soluble carboxylic acid is not particularly limited. Examples thereof include dicarboxylic acids, which can be represented by R₁-(COOH)₂ [R₁ = C₀ to C₈], such as oxalic acid, malonic acid, succinic acid, glutaric acid, adipic acid, and suberic acid, and the oxalic acid and malonic acid where R₁ = C₀ and C₁, respectively, are preferred. Examples of the salt of the water-soluble carboxylic acid include salts of alkali metals such as potassium and sodium, salts of alkaline earth metals such as calcium and magnesium, and ammonium salts . These water-soluble carboxylic acids or salts thereof may be used singly or in combination of two or more kinds.

The trivalent chromium chemical conversion treatment liquid for a zinc or zinc alloy base of the present invention may further contain a water-soluble metal salt containing a metal selected from the group consisting of Zn, Al, Ti, Mo, V, Ce, and W.

An example of the water-soluble metal salt is K₂TiF₆ or the like. These water-soluble metal salts may be used singly or in combination of two or more kinds. The content of the water-soluble metal salt is preferably 0.1 g/L to 1.5 g/L, and more preferably 0.2 g/L to 1.0 g/L.

The trivalent chromium chemical conversion treatment liquid for a zinc or zinc alloy base of the present invention may further contain a phosphorus compound.

An example of the phosphorus compound is NaH₂PO₂ (sodium hypophosphite) or the like. These phosphorus compounds may be used singly or in combination of two or more kinds . The content of the phosphorus compound is preferably 0.01 g/L to 1.0 g/L, and more preferably 0.1 g/L to 0.5 g/L.

The trivalent chromium chemical conversion treatment liquid for a zinc or zinc alloy base of the present invention has a pH in a range of 2.5 to 5.0, preferably a range of 3.0 to 4.5, and more preferably a range of 3.0 to 4.0. In order to adjust the pH within such a range, it is possible to use an inorganic acid such as hydrochloric acid or nitric acid, an organic acid, or an alkaline agent such as ammonia, ammonium salt, caustic alkali, sodium carbonate, potassium carbonate, or ammonium carbonate. By setting the pH within such a range, excellent appearance and corrosion resistance can be obtained.

In the trivalent chromium chemical conversion treatment liquid for a zinc or zinc alloy base of the present invention, the residue other than the above components is water.

As a method of forming a trivalent chromium chemical conversion coating on zinc or zinc alloy plating by using the trivalent chromium chemical conversion treatment liquid for a zinc or zinc alloy base of the present invention, any publicly known method not particularly limited can be applied. For example, a method such as dipping may be used to bring the base material plated with zinc or zinc alloy into contact with the chemical conversion treatment liquid. In the case of dipping, the temperature of the chemical conversion treatment liquid during the treatment is preferably 20 to 60°C, and more preferably 30 to 40°C. The dipping period is preferably 5 to 600 seconds, and more preferably 30 to 300 seconds. Here, in order to activate the zinc- or zinc alloy-plated surface, the base material may be dipped into a dilute nitric acid solution (such as 5% nitric acid), a dilute sulfuric acid solution, a dilute hydrochloric acid solution, a dilute hydrofluoric acid solution, or the like before the trivalent chromium chemical conversion treatment. The conditions and treatment operations other than the aforementioned ones may be determined and carried out according to the conventional hexavalent chromate treatment method.

The trivalent chromium chemical conversion coating formed on the zinc or zinc alloy plating by using the trivalent chromium chemical conversion treatment liquid for a zinc or zinc alloy base of the present invention contains trivalent chromium, zirconium, and chain silica, but does not contain hexavalent chromium.

Next, the present invention is described by using Examples and Comparative Examples. The present invention should not be limited to these examples.

### [Examples]

Examples 1 to 5 and Comparative Examples 1 to 4 used, as a zinc-plated test specimen, a matt steel sheet in size of 0.5 × 50 × 70 mm plated with zinc in a zincate bath (NZ-98 manufactured by DIPSOL CHEMICALS Co., Ltd.) in a thickness of 9 to 10 µm. The zinc-plated test specimen was dipped in a 5% nitric acid aqueous solution at room temperature for 10 seconds and then was thoroughly rinsed with running tap water to clean the surface. Next, the zinc-plated test specimen was subjected to the chemical conversion treatment specified below. The test specimen after the chemical conversion treatment was thoroughly washed with tap water and ion exchanged water, and then was placed and dried in an electric drying oven kept at 80°C for 10 minutes.

### (Example 1)

A chemical conversion treatment liquid was prepared as specified below, and the pH of the liquid was adjusted to 3.7 with ammonia water. Thereafter, the above test specimen was dipped in the chemical conversion treatment liquid at 35°C for 60 seconds.
(A) 40% chromium nitrate: 5.4 g/L (9 mmol/L in terms of Cr³⁺ ions and 27 mmol/L in terms of NO₃⁻ ions)
(B) Potassium fluorozirconate: 2.0 g/L (7 mmol/L in terms of Zr ions)
(C) Ammonium nitrate: 4.8 g/ L (60 mmol/L in terms of NO₃⁻ ions)
(D) Chain colloidal silica (diameter of 40-100 nm): 20.0 g/L (50 mmol/L)
   The residue is water.

### (Example 2)

A chemical conversion treatment liquid was prepared as specified below, and the pH of the liquid was adjusted to 3.5 with ammonia water. Thereafter, the above test specimen was dipped in the chemical conversion treatment liquid at 45°C for 40 seconds.
(A) 35% chromium chloride: 9.0 g/L (20 mmol/L in terms of Cr³⁺ ions)
(B) 40% zirconium fluoride: 7.8 g/L (15 mmol/L in terms of Zr ions)
(C) Sodium nitrate: 7.2 g/L (85 mmol/L in terms of NO₃⁻ ions) Zinc nitrate hexahydrate: 0.75 g/L (5 mmol/L in terms of NO₃⁻ ions)
(D) Chain colloidal silica (diameter of 40-100 nm): 40.0 g/L (100 mmol/L)
   The residue is water.

### (Example 3)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium sulfate: 8.8 g/L (18 mmol/L in terms of Cr³⁺ ions)
(B) Ammonium hexafluorozirconate: 2.4 g/L (10 mmol/L in terms of Zr ions)
(C) Ammonium nitrate: 12.0 g/L (150 mmol/L in terms of NO₃⁻ ions)
(D) Chain colloidal silica (diameter of 40-100 nm): 64.0 g/L (160 mmol/L)
   The residue is water.

### (Example 4)

A chemical conversion treatment liquid was prepared as specified below, and the pH of the liquid was adjusted to 3.5 with ammonia water. Thereafter, the above test specimen was dipped in the chemical conversion treatment liquid at 40°C for 20 seconds.
(A) 40% chromium sulfate: 8.8 g/L (18 mmol/L in terms of Cr³⁺ ions)
(B) Potassium fluorozirconate: 2.8 g/L (10 mmol/L in terms of Zr ions)
(C) Ammonium nitrate: 8.0 g/L (100 mmol/L in terms of NO₃⁻ ions)
(D) Chain colloidal silica (diameter of 40-100 nm): 108.0 g/L (270 mmol/L)
   The residue is water.

### (Example 5)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium nitrate: 11.9 g/L (in terms of Cr³⁺ ion 20 mmol/L, in terms of NO₃⁻ ion 60 mmol/L)
(B) Ammonium hexafluorozirconate: 1.9 g/L (8 mmol/L in terms of Zr ions)
(C) Cobalt nitrate hexahydrate: 5.0 g/L (17 mmol/L in terms of Co ions and 34 mmol/L in terms of NO₃⁻ ions)
(D) Sodium nitrate: 7.2 g/L (85 mmol/L in terms of NO₃⁻ ions)
(E) Chain colloidal silica (diameter of 40-100 nm): 64.0 g/L (160 mmol/L)
   The residue is water.

### (Comparative Example 1)

A chemical conversion treatment liquid was prepared as specified below, and the pH of the liquid was adjusted to 3.5 with caustic soda. Thereafter, the above test specimen was dipped in the chemical conversion treatment liquid at 30°C for 40 seconds.
(A) 40% chromium nitrate: 11.9 g/L (20 mmol/L in terms of Cr and 60 mmol/L in terms of NO₃⁻ ions)
(B) Ammonium hexafluorozirconate: 2.4 g/L (10 mmol/L in terms of Zr ions)
(C) Sodium nitrate: 3.4 g/L (40 mmol/L in terms of NO₃⁻ ions)
(D) Spherical colloidal silica (diameter of 10-15 nm) : 26.5 g/L (100 mmol/L)
   The residue is water.

### (Comparative Example 2)

A chemical conversion treatment liquid was prepared as specified below, and the pH of the liquid was adjusted to 2.0 with caustic soda. Thereafter, the above test specimen was dipped in the chemical conversion treatment liquid at 30°C for 40 seconds.
(A) 35% chromium chloride: 8.1 g/L (18 mmol/L in terms of Cr³⁺ ions)
(B) Ammonium hexafluorozirconate: 2.2 g/L (9 mmol/L in terms of Zr ions)
(C) Sodium nitrate: 7.2 g/L (85 mmol/L in terms of NO₃⁻ ions)
(D) Chain colloidal silica (diameter of 40-100 nm): 64.0 g/L (160 mmol/L)
   The residue is water.

### (Comparative Example 3)

A chemical conversion treatment liquid was prepared as specified below, and the pH of the liquid was adjusted to 2.5 with caustic soda. Thereafter, the above test specimen was dipped in the chemical conversion treatment liquid at 30°C for 40 seconds.
(A) 40% chromium nitrate: 47.7 g/L (80 mmol/L in terms of Cr³⁺ ions and 240 mmol/L in terms of NO₃⁻ ions)
(B) Ammonium hexafluorozirconate: 2.4 g/L (10 mmol/L in terms of Zr ions)
(C) Cobalt nitrate hexahydrate: 5.0 g/L (17 mmol/L in terms of Co ions and 34 mmol/L in terms of NO₃⁻ ions)
(D) Oxalic acid dihydrate: 3.8 g/L (30 mmol/L in terms of oxalic acid)
   Malonic acid: 3.1 g/L (30 mmol/L in terms of malonic acid) (E) Chain colloidal silica (diameter of 40-100 nm): 48.0 g/L (120 mmol/L)
   The residue is water.

### (Comparative Example 4)

A chemical conversion treatment liquid was prepared as specified below, and the pH of the liquid was adjusted to 3.5 with caustic soda. Thereafter, the above test specimen was dipped in the chemical conversion treatment liquid at 40°C for 30 seconds.
(A) 40% chromium sulfate: 9.8 g/L (20 mmol/L in terms of Cr³⁺ ions)
(B) Ammonium hexafluorozirconate: 2.2 g/L (9 mmol/L in terms of Zr ions)
(C) Cobalt chloride hexahydrate: 4.1 g/L (17 mmol/L in terms of Co ions)
(D) Oxalic acid dihydrate: 3.8 g/L (30 mmol/L in terms of oxalic acid)
   Malonic acid: 3.1 g/L (30 mmol/L in terms of malonic acid) (E) Spherical colloidal silica (diameter of 70-100 nm): 26.5 g/L (100 mmol/L)
   The residue is water.

Examples 6 to 10 and Comparative Examples 5 and 6 used, as a zinc-plated test specimen, a matt steel sheet in size of 0.5 × 50 × 70 mm plated with zinc in an acidic bath (EZ-985CS manufactured by DIPSOL CHEMICALS Co., Ltd.) in a thickness of 9 to 13 µm. The zinc-plated test specimen was dipped in a 5% nitric acid aqueous solution at room temperature for 10 seconds and then was thoroughly rinsed with running tap water to clean the surface. Next, the zinc-plated test specimen was subjected to the chemical conversion treatment specified below. The test specimen after the chemical conversion treatment was thoroughly washed with tap water and ion exchanged water, and then was placed and dried in the electric drying oven kept at 80°C for 10 minutes.

### (Example 6)

A chemical conversion treatment liquid was prepared as specified below, and the pH of the liquid was adjusted to 3.5 with ammonia water. Thereafter, the above test specimen was dipped in the chemical conversion treatment liquid at 45°C for 40 seconds.
(A) 35% chromium chloride: 9.0 g/L (20 mmol/L in terms of Cr³⁺ ions)
(B) Ammonium hexafluorozirconate: 2.4 g/L (10 mmol/L in terms of Zr ions)
(C) Ammonium nitrate: 12.0 g/L (150 mmol/L in terms of NO₃⁻ ions)
   Zinc nitrate hexahydrate: 0.75 g/L (5 mmol/L in terms of NO₃⁻ ions)
(D) Chain colloidal silica (diameter of 40-100 nm): 40.0 g/L (100 mmol/L)
   The residue is water.

### (Example 7)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium sulfate: 8.8 g/L (18 mmol/L in terms of Cr³⁺ ions)
(B) Potassium fluorozirconate: 2.6 g/L (9 mmol/L in terms of Zr ions)
(C) Sodium nitrate: 7.2 g/L (85 mmol/L in terms of NO₃⁻ ions)
(D) Chain colloidal silica (diameter of 40-100 nm): 64.0 g/L (160 mmol/L)
   The residue is water.

### (Example 8)

A chemical conversion treatment liquid was prepared as specified below, and the pH of the liquid was adjusted to 3.5 with ammonia water. Thereafter, the above test specimen was dipped in the chemical conversion treatment liquid at 40°C for 20 seconds.
(A) 40% chromium sulfate: 8.8 g/L (18 mmol/L in terms of Cr³⁺ ions)
(B) 40% zirconium fluoride: 5.2 g/L (10 mmol/L in terms of Zr ions)
(C) Ammonium nitrate: 8.0 g/L (100 mmol/L in terms of NO₃⁻ ions)
(D) Chain colloidal silica (diameter of 40-100 nm): 107.9 g/L (270 mmol/L)
   The residue is water.

### (Example 9)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium nitrate: 6.0 g/L (10 mmol/L in terms of Cr³⁺ ions and 30 mmol/L in terms of NO₃⁻ ions)
(B) Ammonium hexafluorozirconate: 3.6 g/L (15 mmol/L in terms of Zr ions)
(C) Ammonium nitrate: 8.0 g/L (100 mmol/L in terms of NO₃⁻ ions)
(D) Chain colloidal silica (diameter of 40-100 nm): 64.0 g/L (160 mmol/L)
   The residue is water.

### (Example 10)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 35% chromium chloride: 13.6 g/L (30 mmol/L in terms of Cr³⁺ ions)
(B) Ammonium hexafluorozirconate: 3.6 g/L (15 mmol/L in terms of Zr ions)
(C) Cobalt nitrate hexahydrate: 5.0 g/L (17 mmol/L in terms of Co ions and 34 mmol/L in terms of NO₃⁻ ions)
(D) Sodium nitrate: 2.6 g/L (30 mmol/L in terms of NO₃⁻ ions)
(E) Chain colloidal silica (diameter of 40-100 nm): 40.0 g/L (100 mmol/L)
   The residue is water.

### (Comparative Example 5)

A chemical conversion treatment liquid was prepared as specified below, and the pH of the liquid was adjusted to 2.0 with caustic soda. Thereafter, the above test specimen was dipped in the chemical conversion treatment liquid at 40°C for 30 seconds.
(A) 40% chromium nitrate: 23.9 g/L (40 mmol/L in terms of Cr³⁺ ions and 120 mmol/L in terms of NO₃⁻ ions)
(B) Cobalt nitrate hexahydrate: 5.0 g/L (17 mmol/L in terms of Co ions and 34 mmol/L in terms of NO₃⁻ ions)
(C) Oxalic acid dihydrate: 1.9 g/L (15 mmol/L in terms of oxalic acid) Malonic acid: 1.6 g/L (15 mmol/L in terms of malonic acid)
(D) Spherical colloidal silica (diameter of 10-15 nm) : 26.5 g/L (100 mmol/L)
   The residue is water.

### (Comparative Example 6)

A chemical conversion treatment liquid was prepared as specified below, and the pH of the liquid was adjusted to 3.5 with caustic soda. Thereafter, the above test specimen was dipped in the chemical conversion treatment liquid at 30°C for 40 seconds.
(A) 35% chromium chloride: 9.0 g/L (20 mmol/L in terms of Cr³⁺ ions)
(B) Cobalt nitrate hexahydrate: 5.0 g/L (17 mmol/L in terms of Co ions and 34 mmol/L in terms of NO₃⁻ ions)
(C) Malonic acid: 6.2 g/L (60 mmol/L in terms of malonic acid)
(D) Sodium nitrate: 1.7 g/L (20 mmol/L in terms of NO₃⁻ ions)
(E) Spherical colloidal silica (diameter of 70-100 nm): 26.5 g/L (100 mmol/L)
   The residue is water.

Examples 11 and 12 and Comparative Examples 7 and 8 used, as a test specimen plated with zinc-nickel alloy, a matt steel sheet in size of 0.5 × 50 × 70 mm plated with a zinc-nickel alloy in a zincate bath (IZ-250 manufactured by DIPSOL CHEMICALS Co. , Ltd.) in a thickness of 9 to 10 µm. The test specimen plated with zinc-nickel alloy was subjected to the chemical conversion treatment specified below. The test specimen after the chemical conversion treatment was thoroughly washed with tap water and ion exchanged water, and then was placed and dried in the electric drying oven kept at 80°C for 10 minutes.

### (Example 11)

A chemical conversion treatment liquid was prepared as specified below, and the pH of the liquid was adjusted to 3.0 with ammonia water. Thereafter, the above test specimen was dipped in the chemical conversion treatment liquid at 40°C for 60 seconds.
(A) 40% chromium sulfate: 9.8 g/L (20 mmol/L in terms of Cr³⁺ ions)
(B) Ammonium hexafluorozirconate: 3.6 g/L (15 mmol/L in terms of Zr ions)
(C) Ammonium nitrate: 12.0 g/L (150 mmol/L in terms of NO₃⁻ ions)
   Zinc nitrate hexahydrate: 0.75 g/L (5 mmol/L in terms of NO₃⁻ ions)
(D) Chain colloidal silica (diameter of 40-100 nm): 20.0 g/L (50 mmol/L)
   The residue is water.

### (Example 12)

A chemical conversion treatment liquid was prepared as specified below, and the pH of the liquid was adjusted to 3.0 with ammonia water. Thereafter, the above test specimen was dipped in the chemical conversion treatment liquid at 40°C for 60 seconds.
(A) 40% chromium nitrate: 6.0 g/L (10 mmol/L in terms of Cr³⁺ ions and 30 mmol/L in terms of NO₃⁻ ions)
(B) 40% zirconium fluoride: 10.4 g/L (20 mmol/L in terms of Zr ions)
(C) Ammonium nitrate: 12.0 g/L (150 mmol/L in terms of NO₃⁻ ions)
(D) Chain colloidal silica (diameter of 40-100 nm): 40.0 g/L (100 mmol/L)
   The residue is water.

### (Comparative Example 7)

A chemical conversion treatment liquid was prepared as specified below, and the pH of the liquid was adjusted to 3.0 with caustic soda. Thereafter, the above test specimen was dipped in the chemical conversion treatment liquid at 40°C for 60 seconds.
(A) 40% chromium sulfate: 9.8 g/L (20 mmol/L in terms of Cr³⁺ ions)
(B) Ammonium hexafluorozirconate: 3.6 g/L (15 mmol/L in terms of Zr)
(C) Ammonium nitrate: 12.0 g/L (150 mmol/L in terms of NO₃⁻ ions)
   Zinc nitrate hexahydrate: 0.75 g/L (5 mmol/L in terms of NO₃⁻ ions)
(D) Spherical colloidal silica (diameter of 10-15 nm) : 13.3 g/L (50 mmol/L)
   The residue is water.

### (Comparative Example 8)

A chemical conversion treatment liquid was prepared as specified below, and the pH of the liquid was adjusted to 4.0 with caustic soda. Thereafter, the above test specimen was dipped in the chemical conversion treatment liquid at 25°C for 60 seconds.
(A) 35% chromium chloride: 9.0 g/L (20 mmol/L in terms of Cr³⁺ ions)
(B) Cobalt nitrate hexahydrate: 5.0 g/L (17 mmol/L in terms of Co ions and 34 mmol/L in terms of NO₃⁻ ions)
(C) Sodium nitrate: 3.4 g/L (40 mmol/L in terms of NO₃⁻ ions)
(D) Oxalic acid dihydrate: 2.5 g/L (20 mmol/L in terms of oxalic acid)
   The residue is water.

Examples 13 to 17 and Comparative Examples 9 to 11 used, as a zinc-plated test specimen, a disc brake caliper (material FCD-450) plated with zinc in an acidic bath (EZ-985CS manufactured by DIPSOL CHEMICALS Co., Ltd.) in a thickness of 5 to 25 µm (the thickness varies among portions). The zinc-plated test specimen was dipped in a 5% nitric acid aqueous solution at room temperature for 10 seconds and then was thoroughly rinsed with running tap water to clean the surface. Next, the zinc-plated test specimen was subjected to the chemical conversion treatment specified below. The test specimen after the chemical conversion treatment was thoroughly washed with tap water and ion exchanged water, and then was placed and dried in the electric drying oven kept at 80°C for 10 minutes.

### (Example 13)

A chemical conversion treatment liquid was prepared as specified below, and the pH of the liquid was adjusted to 3.5 with ammonia water. Thereafter, the above test specimen was dipped in the chemical conversion treatment liquid at 45°C for 40 seconds.
(A) 35% chromium chloride: 9.0 g/L (20 mmol/L in terms of Cr³⁺ ions)
(B) Ammonium hexafluorozirconate: 2.4 g/L (10 mmol/L in terms of Zr ions)
(C) Ammonium nitrate: 12.0 g/L (150 mmol/L in terms of NO₃⁻ ions)
   Zinc nitrate hexahydrate: 0.75 g/L (5 mmol/L in terms of NO₃⁻ ions)
(D) Chain colloidal silica (diameter of 40-100 nm): 40.0 g/L (100 mmol/L)
   The residue is water.

### (Example 14)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium sulfate: 8.8 g/L (18 mmol/L in terms of Cr³⁺ ions)
(B) Potassium fluorozirconate: 2.6 g/L (9 mmol/L in terms of Zr ions)
(C) Sodium nitrate: 7.2 g/L (85 mmol/L in terms of NO₃⁻ ions)
(D) Chain colloidal silica (diameter of 40-100 nm): 64.0 g/L (160 mmol/L)
   The residue is water.

### (Example 15)

A chemical conversion treatment liquid was prepared as specified below, and the pH of the liquid was adjusted to 3.5 with ammonia water. Thereafter, the above test specimen was dipped in the chemical conversion treatment liquid at 40°C for 20 seconds.
(A) 40% chromium sulfate: 8.8 g/L (18 mmol/L in terms of Cr³⁺ ions)
(B) 40% zirconium fluoride: 5.2 g/L (10 mmol/L in terms of Zr ions)
(C) Ammonium nitrate: 8.0 g/L (100 mmol/L in terms of NO₃⁻ ions)
(D) Chain colloidal silica (diameter of 40-100 nm): 107.9 g/L (270 mmol/L)
   The residue is water.

### (Example 16)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 40% chromium nitrate: 11.9 g/L (20 mmol/L in terms of Cr³⁺ ions and 60 mmol/L in terms of NO₃⁻ ions)
(B) Ammonium hexafluorozirconate: 3.6 g/L (15 mmol/L in terms of Zr ions)
(C) Ammonium nitrate: 8.0 g/L (100 mmol/L in terms of NO₃⁻ ions)
(D) Chain colloidal silica (diameter of 40-100 nm): 64.0 g/L (160 mmol/L)
   The residue is water.

### (Example 17)

A chemical conversion treatment liquid was prepared as specified below, and the pH of the liquid was adjusted to 3.5 with ammonia water. Thereafter, the above test specimen was dipped in the chemical conversion treatment liquid at 40°C for 30 seconds.
(A) 35% chromium chloride: 13.6 g/L (30 mmol/L in terms of Cr³⁺ ions)
(B) Ammonium hexafluorozirconate: 3.6 g/L (15 mmol/L in terms of Zr ions)
   Cobalt nitrate hexahydrate: 5.0 g/L (17 mmol/L in terms of Co ions and 34 mmol/L in terms of NO₃⁻ ions)
(C) Sodium nitrate: 2.6 g/L (30 mmol/L in terms of NO₃⁻ ions)
(D) Chain colloidal silica (diameter of 40-100 nm): 40.0 g/L (100 mmol/L)
   The residue is water.

### (Comparative Example 9)

A chemical conversion treatment liquid was prepared as specified below, and the pH of the liquid was adjusted to 3.5 with caustic soda. Thereafter, the above test specimen was dipped in the chemical conversion treatment liquid at 30°C for 40 seconds.
(A) 40% chromium nitrate: 11.9 g/L (20 mmol/L in terms of Cr³⁺ ions and 60 mmol/L in terms of NO₃⁻ ions)
(B) Ammonium hexafluorozirconate: 2.4 g/L (10 mmol/L in terms of Zr ions)
(C) Sodium nitrate: 3.4 g/L (40 mmol/L in terms of NO₃⁻ ions)
(D) Spherical colloidal silica (diameter of 10-15 nm) : 26.5 g/L (100 mmol/L)
   The residue is water.

### (Comparative Example 10)

A chemical conversion treatment liquid was prepared as specified below, and the pH of the liquid was adjusted to 2.0 with caustic soda. Thereafter, the above test specimen was dipped in the chemical conversion treatment liquid at 40°C for 30 seconds.
(A) 40% chromium nitrate: 23.9 g/L (40 mmol/L in terms of Cr³⁺ ions and 120 mmol/L in terms of NO₃⁻ ions)
(B) Cobalt nitrate hexahydrate: 5.0 g/L (17 mmol/L in terms of Co ions and 34 mmol/L in terms of NO₃⁻ ions)
(C) Oxalic acid dihydrate: 1.9 g/L (15 mmol/L in terms of oxalic acid)
   Malonic acid: 1.6 g/L (15 mmol/L in terms of malonic acid)
(D) Chain colloidal silica (diameter of 40-100 nm): 40.0 g/L (100 mmol/L)
   The residue is water.

### (Comparative Example 11)

A chemical conversion treatment liquid was prepared as specified below, and the pH of the liquid was adjusted to 3.5 with caustic soda. Thereafter, the above test specimen was dipped in the chemical conversion treatment liquid at 30°C for 40 seconds.
(A) 35% chromium chloride: 9.0 g/L (20 mmol/L in terms of Cr³⁺ ions)
(B) Ammonium hexafluorozirconate: 2.4 g/L (10 mmol/L in terms of Zr ions)
(C) Cobalt chloride hexahydrate: 4.1 g/L (17 mmol/L in terms of Co ions)
(D) Malonic acid: 6.2 g/L (60 mmol/L in terms of malonic acid)
(E) Spherical colloidal silica (diameter of 40-100 nm): 26.5 g/L (100 mmol/L)
   The residue is water.

Examples 18 and 19 and Comparative Examples 12 and 13 used, as a test specimen plated with zinc-nickel alloy, a disc brake caliper (material FCD-450) plated with a zinc-nickel alloy in an acidic bath (IZA-2500 manufactured by DIPSOL CHEMICALS Co., Ltd.) in a thickness of 5 to 25 µm (the thickness varies among portions). The test specimen plated with zinc-nickel alloy was subjected to the chemical conversion treatment specified below. The test specimen after the chemical conversion treatment was thoroughly washed with tap water and ion exchanged water, and then was placed and dried in the electric drying oven kept at 80°C for 10 minutes.

### (Example 18)

A chemical conversion treatment liquid was prepared as specified below, and the pH of the liquid was adjusted to 3.0 with ammonia water. Thereafter, the above test specimen was dipped in the chemical conversion treatment liquid at 40°C for 60 seconds.
(A) 40% chromium sulfate: 4.9 g/L (10 mmol/L in terms of Cr³⁺ ions)
(B) Ammonium hexafluorozirconate: 1.7 g/L (7 mmol/L in terms of Zr ions)
(C) Ammonium nitrate: 12.0 g/L (150 mmol/L in terms of NO₃⁻ ions)
   Zinc nitrate hexahydrate: 0.75 g/L (5 mmol/L in terms of NO₃ ions)
(D) Chain colloidal silica (diameter of 40-100 nm): 20.0 g/L (50 mmol/L)
   The residue is water.

### (Example 19)

A chemical conversion treatment liquid was prepared as specified below, and the pH of the liquid was adjusted to 3.0 with ammonia water. Thereafter, the above test specimen was dipped in the chemical conversion treatment liquid at 40°C for 60 seconds.
(A) 40% chromium nitrate: 3.0 g/L (5 mmol/L in terms of Cr³⁺ ions and 15 mmol/L in terms of NO₃⁻ ions)
(B) 40% zirconium fluoride: 5.2 g/L (10 mmol/L in terms of Zr ions)
(C) Ammonium nitrate: 12.0 g/L (150 mmol/L in terms of NO₃⁻ ions)
(D) Chain colloidal silica (diameter of 40-100 nm): 40.0 g/L (100 mmol/L)
   The residue is water.

### (Comparative Example 12)

A chemical conversion treatment liquid was prepared as specified below, and the pH of the liquid was adjusted to 3.0 with caustic soda. Thereafter, the above test specimen was dipped in the chemical conversion treatment liquid at 40°C for 60 seconds.
(A) 40% chromium sulfate: 4.9 g/L (10 mmol/L in terms of Cr³⁺ ions)
(B) Ammonium hexafluorozirconate: 1.7 g/L (7 mmol/L in terms of Zr ions)
(C) Ammonium nitrate: 12.0 g/L (150 mmol/L in terms of NO₃⁻ ions)
   Zinc nitrate hexahydrate: 0.75 g/L (5 mmol/L in terms of NO₃⁻ ions)
(D) Spherical colloidal silica (diameter of 10-15 nm) : 13.3 g/L (50 mmol/L)
   The residue is water.

### (Comparative Example 13)

A chemical conversion treatment liquid was prepared as specified below, and the pH of the liquid was adjusted to 4.0 with caustic soda. Thereafter, the above test specimen was dipped in the chemical conversion treatment liquid at 25°C for 60 seconds.
(A) 35% chromium chloride: 9.0 g/L (20 mmol/L in terms of Cr³⁺ ions)
(B) Cobalt nitrate hexahydrate: 5.0 g/L (17 mmol/L in terms of Co ions and 34 mmol/L in terms of NO₃⁻ ions)
(C) Sodium nitrate: 3.4 g/L (40 mmol/L in terms of NO₃⁻ ions)
(D) Oxalic acid dihydrate: 2.5 g/L (20 mmol/L in terms of oxalic acid)
   The residue is water.

The appearance of each of the chemical conversion coatings was evaluated from the viewpoints of color tone, uniformity and gloss. The evaluation criteria for the color tone are as follows.
(Good) Silver white > Blue > Interference color > White (Bad)
The evaluation criteria for the uniformity are as follows.
Good: The trivalent chromium chemical conversion coating was uniformly finished without white haze.
Poor: The trivalent chromium chemical conversion coating was non-uniformly finished with white haze.
A salt spray test (hereinafter referred to as SST) was carried out according to JIS Z-2371 on the test specimens after the chemical conversion treatment, and the corrosion resistance was evaluated by using a white rust generation time and a red rust generation time in units of 24 hours.

Table 1 presents the results of Examples 1 to 5, Table 2 presents the results of Examples 6 to 10, Table 3 presents the results of Examples 11 and 12, Table 4 presents the results of Examples 13 to 17, Table 5 presents the results of Examples 18 and 19, Table 6 presents the results of Comparative Examples 1 to 4, Table 7 presents the results of Comparative Examples 5 and 6, Table 8 presents the results of Comparative Examples 7 and 8, and Table 9 presents the results of Comparative Examples 9 to 13.

**[Table 1]**

| Table 1 | | (Unit: mmol/L) | | | | |
|---|---|---|---|---|---|---|
| | | Zinc Plating (Zincate Bath) | | | | |
| [Example] | | 1 | 2 | 3 | 4 | 5 |
| 40% Chromium Nitrate (in terms of Cr³⁺ ions) | | 9 | | | | 20 |
| 35% Chromium Chloride (in terms of Cr³⁺ ions) | | | 20 | | | |
| 40% Chromium Sulfate (in terms of Cr³⁺ ions) | | | | 18 | 18 | |
| Potassium Fluorozirconate (in terms of Zr ions) | | 7 | | | 10 | |
| 40% Zirconium Fluoride (in terms of Zr ions) | | | 15 | | | |
| Ammonium Hexafluorozirconate (in terms of Zr ions) | | | | 10 | | 8 |
| Cobalt Nitrate (in terms of Co ions) | | | | | | 17 |
| Chain Colloidal Silica (Particle Size 40-100 nm) | | 50 | 100 | 160 | 270 | 160 |
| Sodium Nitrate (in terms of NO₃⁻ ions) | | | 85 | | | 85 |
| Ammonium Nitrate (in terms of NO₃⁻ ions) | | 60 | | 150 | 100 | |
| Zinc Nitrate (in terms of NO₃⁻ ions) | | | 5 | | | |
| Total NO₃⁻ ions | | 87 | 90 | 150 | 100 | 179 |
| Cr³⁺ ions/Zr ions (Molar Ratio) | | 1.29 | 1.33 | 1.80 | 1.80 | 2.50 |

| [Treatment Conditions] | | | | | | |
|---|---|---|---|---|---|---|
| pH | | 3.7 | 3.5 | 3.5 | 3.5 | 3.5 |
| Temperature (°C) | | 35 | 45 | 40 | 40 | 40 |
| Time (Second) | | 60 | 40 | 30 | 20 | 30 |

| [Properties] | | | | | | |
|---|---|---|---|---|---|---|
| Appearance | Color Tone | Silver white | Silver white | Silver white | Silver white | Silver white |
| | Uniformity | Good | Good | Good | Good | Good |
| | Gloss | Glossy | Glossy | Glossy | Glossy | Glossy |
| Corrosion Resistance (Salt Spray Test) | White Rust Generation (Hour) | 408 | 456 | 600 | 648 | 648 |
| | Red Rust Generation (Hour) | 888 | 960 | >1000 | >1000 | >1000 |

**[Table 2]**

| Table 2 | | (Unit: mmol/L) | | | | |
|---|---|---|---|---|---|---|
| | | Zinc Plating (Acidic Bath) | | | | |
| [Example] | | 6 | 7 | 8 | 9 | 10 |
| 40% Chromium Nitrate (in terms of Cr³⁺ ions) | | | | | 10 | |
| 35% Chromium Chloride (in terms of Cr³⁺ ions) | | 20 | | | | 30 |
| 40% Chromium Sulfate (in terms of Cr³⁺ ions) | | | 18 | 18 | | |
| Potassium Fluorozirconate (in terms of Zr ions) | | | 9 | | | |
| 40% Zirconium Fluoride (in terms of Zr ions) | | | | 10 | | |
| Ammonium Hexafluorozirconate (in terms of Zr ions) | | 10 | | | 15 | 15 |
| Cobalt Nitrate (in terms of Co ions) | | | | | | 17 |
| Chain Colloidal Silica (Particle Size 40-100 nm) | | 100 | 160 | 270 | 160 | 100 |
| Sodium Nitrate (in terms of NO₃⁻ ions) | | | 85 | | | 30 |
| Ammonium Nitrate (in terms of NO₃⁻ ions) | | 150 | | 100 | 100 | |
| Zinc Nitrate (in terms of NO₃⁻ ions) | | 5 | | | | |
| Total NO₃⁻ ions | | 155 | 85 | 100 | 130 | 64 |
| Cr³⁺ ions/Zr ions (Molar Ratio) | | 2.00 | 2.00 | 1.80 | 0.67 | 2.00 |

| [Treatment Conditions] | | | | | | |
|---|---|---|---|---|---|---|
| pH | | 3.5 | 3.5 | 3.5 | 3.5 | 3.5 |
| Temperature (°C) | | 45 | 40 | 40 | 40 | 40 |
| Time (Second) | | 40 | 30 | 20 | 30 | 30 |

| [Properties] | | | | | | |
|---|---|---|---|---|---|---|
| Appearance | Color Tone | Silver white | Silver white | Silver white | Silver white | Silver white |
| | Uniformity | Good | Good | Good | Good | Good |
| | Gloss | Glossy | Glossy | Glossy | Glossy | Glossy |
| Corrosion Resistance (Salt Spray Test) | White Rust Generation (Hour) | 600 | 624 | 528 | 624 | 624 |
| | Red Rust Generation (Hour) | >1000 | >1000 | >1000 | >1000 | >1000 |

**[Table 3]**

| Table 3 | | (Unit: mmol/L) | |
|---|---|---|---|
| | | Zn-Ni Plating | |
| [Example] | | 11 | 12 |
| 40% Chromium Nitrate (in terms of Cr³⁺ ions) | | | 10 |
| 35% Chromium Chloride (in terms of Cr³⁺ ions) | | | |
| 40% Chromium Sulfate (in terms of Cr³⁺ ions) | | 20 | |
| Potassium Fluorozirconate (in terms of Zr ions) | | | |
| 40% Zirconium Fluoride (in terms of Zr ions). | | | 20 |
| Ammonium Hexafluorozirconate (in terms of Zr ions) | | 15 | |
| Cobalt Nitrate (in terms of Co ions) | | | |
| Chain Colloidal Silica (Particle Size 40-100 nm) | | 50 | 100 |
| Sodium Nitrate (in terms of NO₃⁻ ions) | | | |
| Ammonium Nitrate (in terms of NO₃⁻ ions) | | 150 | 150 |
| Zinc Nitrate (in terms of NO₃⁻ ions) | | 5 | |
| Total NO₃⁻ ions | | 155 | 180 |
| Cr³⁺ ions/Zr ions (Molar Ratio) | | 1.33 | 0.50 |

| [Treatment Conditions] | | | |
|---|---|---|---|
| pH | | 3.0 | 3.0 |
| Temperature (°C) | | 40 | 40 |
| Time (Second) | | 60 | 60 |

| [Properties] | | | |
|---|---|---|---|
| Appearance | Color Tone | Silver white | Silver white |
| | Uniformity | Good | Good |
| | Gloss | Glossy | Glossy |
| Corrosion Resistance (Salt Spray Test) | White Rust Generation (Hour) | 792 | 720 |
| | Red Rust Generation (Hour) | >1200 | >1200 |

**[Table 4]**

| Table 4 | | (Unit: mmol/L) | | | | |
|---|---|---|---|---|---|---|
| | | Zinc Plating (Acidic Bath) | | | | |
| [Example] | | 13 | 14 | 15 | 16 | 17 |
| 40% Chromium Nitrate (in terms of Cr³⁺ ions) | | | | | 20 | |
| 35% Chromium Chloride (in terms of Cr³⁺ ions) | | 20 | | | | 30 |
| 40% Chromium Sulfate (in terms of Cr³⁺ ions) | | | 18 | 18 | | |
| Potassium Fluorozirconate (in terms of Zr ions) | | | 9 | | | |
| 40% Zirconium Fluoride (in terms of Zr ions) | | | | 10 | | |
| Ammonium Hexafluorozirconate (in terms of Zr ions) | | 10 | | | 15 | 15 |
| Cobalt Nitrate (in terms of Co ions) | | | | | | 17 |
| Chain Colloidal Silica (Particle Size 40-100 nm) | | 100 | 160 | 270 | 160 | 100 |
| Sodium Nitrate (in terms of NO₃⁻ ions) | | | 85 | | | 30 |
| Ammonium Nitrate (in terms of NO₃⁻ ions) | | 150 | | 100 | 100 | |
| Zinc Nitrate (in terms of NO₃⁻ ions) | | 5 | | | | |
| Total NO₃⁻ ions | | 155 | 85 | 100 | 160 | 64 |
| Cr³⁺ ions/Zr ions (Molar Ratio) | | 2.00 | 2.00 | 1.80 | 1.33 | 2.00 |

| [Treatment Conditions] | | | | | | |
|---|---|---|---|---|---|---|
| pH | | 3.5 | 3.5 | 3.5 | 3.5 | 3.5 |
| Temperature (°C) | | 45 | 40 | 40 | 40 | 40 |
| Time (Second) | | 40 | 30 | 20 | 30 | 30 |

| [Properties] | | | | | | |
|---|---|---|---|---|---|---|
| Appearance | Color Tone | Silver white | Silver white | Silver white | Silver white | Silver white |
| | Uniformity | Good | Good | Good | Good | Good |
| | Gloss | Glossy | Glossy | Glossy | Glossy | Glossy |
| Corrosion Resistance (Salt Spray Test) | White Rust Generation (Hour) | 336 | 384 | 408 | 504 | 480 |
| | Red Rust Generation (Hour) | 792 | 816 | 840 | 936 | 960 |

**[Table 5]**

| Table 5 | | (Unit: mmol/L) | |
|---|---|---|---|
| | | | |

| [Example] | | 18 | 19 |
|---|---|---|---|
| 40% Chromium Nitrate (in terms of Cr³⁺ ions) | | | 5 |
| 35% Chromium Chloride (in terms of Cr³⁺ ions) | | | |
| 40% Chromium Sulfate (in terms of Cr³⁺ ions) | | 10 | |
| Potassium Fluorozirconate (in terms of Zr ions) | | | |
| 40% Zirconium Fluoride (in terms of Zr ions) | | | 10 |
| Ammonium Hexafluorozirconate (in terms of Zr ions) | | 7 | |
| Cobalt Nitrate (in terms of Co ions) | | | |
| Chain Colloidal Silica (Particle Size 40-100 nm) | | 50 | 100 |
| Sodium Nitrate (in terms of NO₃⁻ ions) | | | |
| Ammonium Nitrate (in terms of NO₃⁻ ions) | | 150 | 150 |
| Zinc Nitrate (in terms of NO₃⁻ ions) | | 5 | |
| Total NO₃⁻ ions | | 155 | 165 |
| Cr³⁺ ions/Zr ions (Molar Ratio) | | 1.43 | 0.50 |

| [Treatment Conditions] | | | |
|---|---|---|---|
| pH | | 3.0 | 3.0 |
| Temperature (°C) | | 40 | 40 |
| Time (Second) | | 60 | 60 |

| [Properties] | | | |
|---|---|---|---|
| Appearance | Color Tone | Silver white | Silver white |
| | Uniformity | Good | Good |
| | Gloss | Glossy | Glossy |
| Corrosion Resistance (Salt Spray Test) | White Rust Generation (Hour) | 720 | 648 |
| | Red Rust Generation (Hour) | >1200 | >1200 |

**[Table 6]**

| Table 6 | | (Unit: mmol/L) | | | |
|---|---|---|---|---|---|
| | | Zinc Plating (Zincate Bath) | | | |
| [Comparative Example] | | 1 | 2 | 3 | 4 |
| 40% Chromium Nitrate (in terms of Cr³⁺ ions) | | 20 | | 80 | |
| 35% Chromium Chloride (in terms of Cr³⁺ ions) | | | 18 | | |
| 40% Chromium Sulfate (in terms of Cr³⁺ ions) | | | | | 20 |
| Ammonium Hexafluorozirconate (in terms of Zr ions) | | 10 | 9 | 10 | 9 |
| Cobalt Nitrate (in terms of Co ions) | | | | 17 | |
| Cobalt Chloride (in terms of Co ions) | | | | | 17 |
| Oxalic Acid | | | | 30 | 30 |
| Malonic Acid | | | | 30 | 30 |
| Spherical Colloidal Silica (Particle Size of 10-15 nm) | | 100 | | | |
| Spherical Colloidal Silica (Particle Size of 70-100 nm) | | | | | 100 |
| Chain Colloidal Silica (Particle Size 40-100 nm) | | | 160 | 120 | |
| Ammonium Nitrate (in terms of NO₃⁻ ions) | | | | | |
| Zinc Nitrate (in terms of NO₃⁻ ions) | | | | | |
| Sodium Nitrate (in terms of NO₃⁻ ions) | | 40 | 85 | | |
| Total NO₃⁻ ions | | 100 | 85 | 274 | 0 |
| Cr³⁺ ions/Zr ions (Molar Ratio) | | 2.00 | 2.00 | 8.00 | 2.22 |

| [Treatment Conditions] | | | | | |
|---|---|---|---|---|---|
| pH | | 3.5 | 2.0 | 2.5 | 3.5 |
| Temperature (°C) | | 30 | 30 | 30 | 40 |
| Time (Second) | | 40 | 40 | 40 | 30 |

| [Properties] | | | | | |
|---|---|---|---|---|---|
| Appearance | Color Tone | White | Structural Color | Structural Color | White |
| | Uniformity | Poor | Poor | Poor | Poor |
| | Gloss | Less Glossy | Not Glossy | Less Glossy | Not Glossy |
| Corrosion Resistance (Salt Spray Test) | White Rust Generation (Hour) | 168 | 192 | 120 | 168 |
| | Red Rust Generation (Hour) | 360 | 384 | 288 | 384 |

**[Table 7]**

| Table 7 | | (Unit: mmol/L) | |
|---|---|---|---|
| | | Zinc Plating (Acidic Bath) | |
| [Comparative Example] | | 5 | 6 |
| 40% Chromium Nitrate (in terms of Cr³⁺ ions) | | 40 | |
| 35% Chromium Chloride (in terms of Cr³⁺ ions) | | | 20 |
| 40% Chromium Sulfate (in terms of Cr³⁺ ions) | | | |
| Ammonium Hexafluorozirconate (in terms of Zr ions) | | | |
| Cobalt Nitrate (in terms of Co ions) | | 17 | 17 |
| Cobalt Chloride (in terms of Co ions) | | | |
| Oxalic Acid | | 15 | |
| Malonic Acid | | 15 | 60 |
| Spherical Colloidal Silica (Particle Size of 10-15 nm) | | 100 | |
| Spherical Colloidal Silica (Particle Size of 70-100 nm) | | | 100 |
| Chain Colloidal Silica (Particle Size 40-100 nm) | | | |
| Ammonium Nitrate (in terms of NO₃⁻ ions) | | | |
| Zinc Nitrate (in terms of NO₃⁻ ions) | | | |
| Sodium Nitrate (in terms of NO₃⁻ ions) | | | 20 |
| Total NO₃⁻ ions | | 154 | 54 |
| Cr³⁺ ions/Zr ions (Molar Ratio) | | - | - |

| [Treatment Conditions] | | | |
|---|---|---|---|
| pH | | 2.0 | 3.5 |
| Temperature (°C) | | 40 | 30 |
| Time (Second) | | 30 | 40 |

| [Properties] | | | |
|---|---|---|---|
| Appearance | Color Tone | structural color | White |
| | Uniformity | Poor | Poor |
| | Gloss | Not Glossy | Not Glossy |
| Corrosion Resistance (Salt Spray Test) | White Rust Generation (Hour) | 192 | 168 |
| | Red Rust Generation (Hour) | 384 | 288 |

**[Table 8]**

| Table 8 | | (Unit: mmol/L) | |
|---|---|---|---|
| | | Zn-Ni Plating | |
| [Comparative Example] | | 7 | 8 |
| 40% Chromium Nitrate (in terms of Cr³⁺ ions) | | | |
| 35% Chromium Chloride (in terms of Cr³⁺ ions) | | | 20 |
| 40% Chromium Sulfate (in terms of Cr³⁺ ions) | | 20 | |
| Ammonium Hexafluorozirconate (in terms of Zr ions) | | 15 | |
| Cobalt Nitrate (in terms of Co ions) | | | 17 |
| Cobalt Chloride (in terms of Co ions) | | | |
| Oxalic Acid | | | 20 |
| Malonic Acid | | | |
| Spherical Colloidal Silica (Particle Size of 10-15 nm) | | 50 | |
| Spherical Colloidal Silica (Particle Size of 70-100 nm) | | | |
| Chain Colloidal Silica (Particle Size of 40-100 nm) | | | |
| Ammonium Nitrate (in terms of NO₃⁻ ions) | | 150 | |
| Zinc Nitrate (in terms of NO₃⁻ ions) | | 5 | |
| Sodium Nitrate (in terms of NO₃⁻ ions) | | | 40 |
| Total NO₃⁻ ions | | 155 | 74 |
| Cr³⁺ ions/Zr ions (Molar Ratio) | | 1.4 | - |

| [Treatment Conditions] | | | |
|---|---|---|---|
| pH | | 3.0 | 4.0 |
| Temperature (°C) | | 40 | 25 |
| Time (Second) | | 60 | 60 |

| [Properties] | | | |
|---|---|---|---|
| Appearance | Color Tone | White | Blue |
| | Uniformity | Poor | Good |
| | Gloss | Not Glossy | Glossy |
| Corrosion Resistance (Salt Spray Test) | White Rust Generation (Hour) | 720 | 720 |
| | Red Rust Generation (Hour) | >1200 | >1200 |

**[Table 9]**

| | | Zinc Plating (Acidic Bath) | | | Zn-Ni Plating | |
|---|---|---|---|---|---|---|
| [Comparative Example] | | 9 | 10 | 11 | 12 | 13 |
| 40% Chromium Nitrate (in terms of Cr³⁺ ions) | | 20 | 40 | | | |
| 35% Chromium Chloride (in terms of Cr³⁺ ions) | | | | 20 | | 20 |
| 40% Chromium Sulfate (in terms of Cr³⁺ ions) | | | | | 10 | |
| Ammonium Hexafluorozirconate (in terms of Zr ions) | | 10 | | 10 | 7 | |
| Cobalt Nitrate (in terms of Co ions) | | | 17 | | | 17 |
| Cobalt Chloride (in terms of Co ions) | | | | 17 | | |
| oxalic acid | | | 15 | | | 20 |
| malonic acid | | | 15 | 60 | | |
| Spherical Colloidal Silica (Particle Size of 10-15 nm) | | 100 | | | 50 | |
| Spherical Colloidal Silica (Particle Size of 70-100 nm) | | | | 100 | | |
| Chain Colloidal Silica (Particle Size 40-100 nm) | | | 100 | | | |
| Ammonium Nitrate (in terms of NO₃⁻ ions) | | | | | 150 | |
| Zinc Nitrate (in terms of NO₃⁻ ions) | | | | | 5 | |
| Sodium Nitrate (in terms of NO₃⁻ ions) | | 40 | | | | 40 |
| Total NO₃⁻ ions | | 100 | 154 | 0 | 155 | 74 |
| Cr³⁺ ions/Zr ions (Molar Ratio) | | 2.00 | - | 2.00 | 1.4 | - |

| [Treatment Conditions] | | | | | | |
|---|---|---|---|---|---|---|
| pH | | 3.5 | 2.0 | 3.5 | 3.0 | 4.0 |
| Temperature (°C) | | 30 | 40 | 30 | 40 | 25 |
| Time (Second) | | 40 | 30 | 40 | 60 | 60 |

| [Properties] | | | | | | |
|---|---|---|---|---|---|---|
| Appearance | Color Tone | White | Structural Color | White | White | Blue |
| | Uniformity | Poor | Poor | Poor | Poor | Good |
| | Gloss | Not Glossy | Not Glossy | Not Glossy | Not Glossy | Glossy |
| Corrosion Resistance (Salt Spray Test) | White Rust Generation (Hour) | 192 | 192 | 168 | 720 | 720 |
| | Red Rust Generation (Hour) | 384 | 384 | 288 | >1200 | >1200 |

## Claims

1. A hexavalent chromium-free trivalent chromium chemical conversion treatment liquid for zinc or zinc alloy comprising trivalent chromium ions, zirconium ions, nitrate ions, and chain colloidal silica, wherein
the pH of the treatment liquid is 2.5 to 5.0; and
a molar ratio of trivalent chromium ions to zirconium ions (trivalent chromium ions/zirconium ions) is 0.1 to 4.

2. The chemical conversion treatment liquid according to claim 1, wherein the treatment liquid has a trivalent chromium ion concentration in a range of 2 to 200 mmol/L and a zirconium ion concentration in a range of 1 to 300 mmol/L.

3. The chemical conversion treatment liquid according to claim 1 or 2, wherein the treatment liquid has a chain colloidal silica concentration in a range of 25 to 600 mmol/L.

4. The chemical conversion treatment liquid according to any one of claims 1 to 3, wherein the treatment liquid has a nitrate ion concentration in a range of 30 to 400 mmol/L.

5. The chemical conversion treatment liquid according to any one of claims 1 to 4, wherein the treatment liquid does not contain cobalt ions.

6. A chemical conversion treatment method comprising bringing the chemical conversion treatment liquid according to any one of claims 1 to 5 into contact with a zinc or zinc alloy surface.

## Patentansprüche

1. Behandlungsflüssigkeit für die chemische Konversion, die von sechswertigem Chrom frei ist und dreiwertiges Chrom enthält, für Zink oder Zinklegierung, umfassend dreiwertige Chromionen, Zirconiumionen, Nitrationen und kettenförmiges kolloidales Siliciumdioxid, wobei
der pH-Wert der Behandlungsflüssigkeit 2,5 bis 5,0 beträgt und
das Molverhältnis von dreiwertigen Chromionen zu Zirconiumionen (dreiwertige Chromionen/Zirconiumionen) 0,1 bis 4 beträgt.

2. Behandlungsflüssigkeit für die chemische Konversion nach Anspruch 1, wobei die Behandlungsflüssigkeit eine Konzentration von dreiwertigen Chromionen in einem Bereich von 2 bis 200 mmol/L und eine Zirconiumionenkonzentration in einem Bereich von 1 bis 300 mmol/L aufweist.

3. Behandlungsflüssigkeit für die chemische Konversion nach Anspruch 1 oder 2, wobei die Behandlungsflüssigkeit eine Konzentration von kettenförmigem kolloidalem Siliciumdioxid in einem Bereich von 25 bis 600 mmol/L aufweist.

4. Behandlungsflüssigkeit für die chemische Konversion nach einem der Ansprüche 1 bis 3, wobei die Behandlungsflüssigkeit eine Nitrationenkonzentration in einem Bereich von 30 bis 400 mmol/L aufweist.

5. Behandlungsflüssigkeit für die chemische Konversion nach einem der Ansprüche 1 bis 4, wobei die Behandlungsflüssigkeit keine Cobaltionen enthält.

6. Behandlungsverfahren für die chemische Konversion, bei dem man die Behandlungsflüssigkeit für die chemische Konversion nach einem der Ansprüche 1 bis 5 mit einer Zink- oder Zinklegierungsoberfläche in Kontakt bringt.

## Revendications

1. Liquide de traitement de conversion chimique de chrome trivalent exempt de chrome hexavalent pour du zinc ou un alliage de zinc comprenant des ions chrome trivalent, des ions zirconium, des ions nitrate, et de la silice colloïdale à chaîne,
le pH du liquide de traitement étant de 2,5 à 5,0 ; et
un rapport molaire d'ions chrome trivalent aux ions zirconium (ions chrome trivalent/ions zirconium) étant de 0,1 à 4.

2. Liquide de traitement de conversion chimique selon la revendication 1, le liquide de traitement possédant une concentration en ions chrome trivalent dans une plage de 2 à 200 mmoles/L et une concentration en ions zirconium dans une plage de 1 à 300 mmoles/L.

3. Liquide de traitement de conversion chimique selon la revendication 1 ou 2, le liquide de traitement possédant une concentration en silice colloïdale à chaîne dans une plage de 25 à 600 mmoles/L.

4. Liquide de traitement de conversion chimique selon l'une quelconque des revendications 1 à 3, le liquide de traitement possédant une concentration en ions nitrate dans une plage de 30 à 400 mmoles/L.

5. Liquide de traitement de conversion chimique selon l'une quelconque des revendications 1 à 4, le liquide de traitement ne contenant pas d'ions cobalt.

6. Procédé de traitement de conversion chimique comprenant la mise en contact du liquide de traitement de conversion chimique selon l'une quelconque des revendications 1 à 5 avec une surface de zinc ou d'alliage de zinc.
